# EUROPEAN PATENT APPLICATION

(11) **EP 4 145 322 A1**
(43) Date of publication of application: **08.03.2023**
(21) Application number: 21194367.5
(22) Date of filing: 01.09.2021
(51) Int. Cl.: G06F 21/60, G06F 21/71

(54) **SYSTEMS AND METHODS FOR IMPLEMENTING PRIVACY LAYER IN CBDC NETWORKS**

(71) Applicant: Fluency Group Ltd, London WC2H 9JQ (GB)
(72) Inventor: MULLINS, Inga, London WC2H 9JQ (GB); BRATANIEC, Pawel, London WC2H 9JQ (GB); JAMROZ, Kamil, London WC2H 9JQ (GB)
(74) Representative: Gill Jennings & Every LLP

(57) **Abstract**

The invention provides a computer-implemented method for configuring a node to join a distributed network such as a CBDC network that enables secure computations to be performed. The invention also provides a computer-implemented method for securely operating on data in a distributed network such as securely performing transactions in a CBDC network. The invention enables this by requiring nodes to perform network-related computations in a trusted execution environment (TEE) within the node processing capabilities. As the TEE is a separate execution environment from the main unsecure computational resources of the node, it is not possible for the unsecure node components to gain access to data relating to the computations. In this manner, secure operation on data is enabled without the significant increase in complexity associated with Zero Knowledge cryptography.

## Description

### FIELD OF THE INVENTION

The present invention relates to systems, methods and procedures used to create distributed networks, their underlying data structures and computational behaviours for implementing distributed networks that require secure computation, for example central bank digital currencies (CBDCs) and related subsystems. More particularly, the present invention describes the uses of generally understood concepts of Blockchain extended by additional use of specialized algorithms, procedures and innovative solutions required to deliver a functional, efficient and secure environment for the creation of a (CBDC) distributed network capable of securely handling digital assets and related financial products. The "handling of" those assets is to specifically be understood as the execution, recording, verification, validation and all post enrolment activities related to them and their subset elements.

### BACKGROUND

Distributed networks are increasingly finding utility in the modern world. A property of existing distributed networks is that computations performed by nodes of the network are carried out in a transparent, insecure manner. That is, a node has access to all data relating to the computation as it performs it. Since all nodes in the distributed network must perform the computations to reach consensus, this means that the entire network has access to all data relating to the computations.

This situation is acceptable in some cases where it does not matter that nodes in the network have access to this information, e.g. cryptocurrency networks. However, increasingly use cases for distributed networks are being presented that require processing of confidential data. Here, confidential data is understood to mean data that should only be known to certain participants in the distributed network, e.g. a particular node, a particular node operator, a particular class of user, a particular user or set of users, and the like.

One such example is a Central Bank Digital Currency (CBDC) distributed network that enables transfer of electronic funds issued by a central bank or other such financial authority as well as the implementation of financial products. In the CBDC case the computations performed by each node in the network can relate to financial transactions, i.e. transferring of digital currency from one user of the network to another. Such computations involve nodes in the CBDC network but it is desirable to prevent these nodes from having access to confidential data involved in the transactions, e.g. the amount of the transaction, the identity of the transmitting and receiving parties, a payment credential, password, PIN, digital signature or other such electronic verification of authority to conduct the transaction, and the like.

This is particularly true in the case where the CBDC network is an account-based CBDC network. This is where each user of the CBDC network has their own account meaning that transactions can be associated with a particular transferring user and recipient user. In traditional finance such transactions are done securely, meaning that only the transferring user and recipient user (and usually certain institutions such as a payment card issuer and acquirer) have access to secure information such as the user's balance before and after the transaction, the amount of the transaction and the payment credential used to effect the transaction.

One of the major requirements for building a CBDC platform is to allow users to keep their privacy - i.e. be able to protect confidential information relating to the user and their transaction history from being accessed by unwanted parties. Only a selected set of participants and users should be able to see that information on any particular user of the network, and that selected set could include e.g. those who are somehow related to that data, any type of endorsers or similar type of participant and authorities. In centralized solutions involving CBDC this is not hard to achieve, as the data itself is being held by different participants and is being shared to others in a limited scope and/or on-demand. In decentralized solutions the problem is much more complicated as the data is being shared and replicated by anyone in the network. To solve this issue the data stored in a decentralized way should be a) limited to the information required by consensus b) secured in a way that data can be validated during consensus, but cannot leak outside it.

One possibility to rectify this is to use Zero Knowledge cryptography. However, it is hard to utilize Zero Knowledge cryptography in some key components of distributed networks, namely smart contracts and virtual machine-based platforms. Additionally, Zero Knowledge cryptography creates a huge knowledge barrier for developers wanting to develop code on the distributed network. In the case of a CBDC network, this risks severely limiting the innovative nature of the platform and may also create security issues in the form of hard to detect vulnerabilities which institutional users of the network such as banks and central banks cannot risk

Therefore, it is clear that there is a need for a distributed network that is able to securely process computations such as transactions in a CBDC network without significantly adding to the complexity of the network or making it difficult to detect security vulnerabilities with the network.

### SUMMARY OF THE INVENTION

Broadly speaking the invention provides a computer-implemented method for configuring a node to join a distributed network such as a CBDC network that enables secure computations to be performed. The invention also provides a computer-implemented method for securely operating on data in a distributed network such as securely performing transactions in a CBDC network. The invention enables this by requiring nodes to perform network-related computations in a trusted execution environment (TEE) within the node processing capabilities. As the TEE is a separate execution environment from the main unsecure computational resources of the node, it is not possible for the unsecure node components to gain access to data relating to the computations. In this manner, secure operation on data is enabled without the significant increase in complexity associated with Zero Knowledge cryptography.

In a first aspect the invention provides a computer-implemented method for securely operating on data in a distributed network, the method performed by a node of the distributed network, the node comprising a processor, a memory, a network interface and a trusted execution environment, TEE, the method comprising: receiving, by the processor and via the network interface, from another node in the distributed network, an encrypted payload and storing the encrypted payload in the memory; transferring, by the processor, the encrypted payload from the memory to the TEE; decrypting, by the TEE, the encrypted payload to generate a decrypted payload; performing, by the TEE, one or more computations on the decrypted payload to generate a modified payload; encrypting, by the TEE, the modified payload to generate an encrypted modified payload; transferring, by the TEE, the encrypted modified payload to the memory; and transmitting, by the processor, the encrypted modified payload to one or more other nodes in the distributed network via the network interface.

In a second aspect the invention provides a computer-implemented method for configuring a first node to enable the first node to join a distributed network comprising the first node and a second node, the first node comprising a processor, a memory, a network interface and a trusted execution environment, TEE, the method comprising: receiving, by the processor, a genesis data structure containing at least a first remote attestation proof; transferring, by the processor, the genesis data structure to the TEE; validating, by the TEE, the first remote attestation proof; generating, by the TEE, a second remote attestation proof corresponding to the first node; generating, by the TEE, a registration public key and a registration private key; transferring, by the TEE, the second remote attestation proof and the registration public key to the processor; transmitting, by the processor and via the network interface, the second remote attestation proof and the registration public key to the second node; receiving, by the processor and via the network interface, an encrypted consensus seed, the encrypted consensus seed encrypted using the registration public key; transferring, by the processor, the encrypted consensus seed to the TEE; decrypting, by the TEE, the encrypted consensus seed using the registration private key; and storing, in a file within the TEE, the decrypted consensus seed.

In a third aspect the invention provides a computer-implemented method for configuring a first node to enable the first node to join a distributed network comprising the first node and a second node, the second node comprising a processor, a memory, a network interface and a trusted execution environment, TEE, the method comprising: receiving, by the processor, a remote attestation proof and a registration public key from the first node; validating, by the TEE, the remote attestation proof; in the event the validation is successful: transferring, by the TEE, an encrypted consensus seed to the processor; and transmitting, by the processor and via the network interface, the encrypted consensus seed to the first node.

In a fourth aspect the invention provides a computer-implemented method for establishing a distributed network using a genesis node comprising a processor, a memory, a network interface and a trusted execution environment, TEE, the method comprising: generating, by the TEE, a pseudo-random consensus seed; encrypting, by the TEE, the consensus seed; and storing, by the TEE, the encrypted consensus seed in a genesis data structure.

Preferred aspects of the invention are set out in the appended dependent claims.

### BRIEF DESCRIPTION OF THE DRAWINGS

The invention is described, by way of example only, with reference to the following drawings in which:
Figure 1 is as schematic drawing of a prior art node in a distributed network;
Figure 2 is a schematic drawing of a node according to an embodiment in a distributed network;
Figure 3 is a schematic drawing of a distributed network according to an embodiment;
Figure 3A is a schematic drawing of specific components of a node operating on states of a smart contract according to an embodiment;
Figure 4 is a flow diagram depicting a process for joining a distributed network from the perspective of the node joining the network, according to an embodiment;
Figure 5 is a flow diagram depicting a process for instantiating a distributed network, according to an embodiment;
Figure 6 is a flow diagram depicting a process for joining a distributed network from the perspective of a node that is already part of the network, according to an embodiment;
Figure 7 is a schematic drawing providing an overview of the process for joining an existing distributed network, according to an embodiment;
Figure 8 is a flow diagram depicting a process for performing an operation within a distributed network, according to an embodiment;
Figure 8A is a schematic diagram providing detailed information on encrypting a shielded transaction in a CBDC network according to an embodiment;
Figure 8B is a schematic diagram providing detailed information on decrypting a shielded transaction in a CBDC network according to an embodiment;
Figure 9 is a flow diagram depicting a process for performing a transaction over a CBDC network, according to an embodiment; and
Figure 10 is a flow diagram depicting a process for reading a ledger state in a CBDC network, according to an embodiment.

### DETAILED DESCRIPTION

In this specification the terms listed below have the following meaning:
A 'distributed network' is understood to refer to a network having distributed components ('nodes') that are distinct from one another, e.g. each node can be a distinct computer. Nodes within the network can be geographically distributed, e.g. potentially located all over the world. The distributed network can function as a shared ledger that operates on shared ledger principles as are known per se in the art (e.g. blockchain or Directed Acyclic Graphs).
A 'Central Bank Digital Currency' (CBDC) is understood to refer to an electronic representation of a traditional fiat currency. A CBDC is issued by an appropriate issuing authority referred to as a Central Bank that is capable of issuing currency on behalf of a nation, state, region, or other such entity. An example of a Central Bank is the European Central Bank for the EU region.
A 'CBDC network' is understood to refer to a distributed network that facilitates operations with a CBDC, primarily transactions between users of the CBDC network, e.g. transactions between merchants and private individuals, or between pairs of private individuals. However, the invention is not limited to financial transactions on a CBDC as other operations such as financial products can also be provided by a CBDC network operating in accordance with the invention. The invention particularly finds utility in an account-based CBDC in which users of the CBDC network each have an account that identifies them uniquely using information such as name, address, date of birth, government-issued data such as passport number, social security number, national insurance number, and the like.
'Secure' or 'confidential' data is understood to refer to data that is private, i.e. it should be accessible only to a selected party or parties and not to any arbitrarily participant in the distributed network such as a node operator or arbitrary user (e.g. using a block explorer). Examples of such data include data relating to a transaction over the distributed network such as an amount of digital currency transferred, an account balance, a payment credential, password, PIN, biometric or other such data used to verify and authenticate the identity of a user, and the like. This list is not exhaustive and the skilled reader will readily identify other secure data.
A 'Trusted Execution Environment' (TEE) is understood to refer to a secure area provided by a computer in which computations can be performed in a secure manner. In particular, computations and data within the TEE are guaranteed to be inaccessible to the 'normal' components of the computer, i.e. those components that are untrusted. TEEs per se are known in the art and so in the interests of brevity a description of a TEE is not provided herein. Any known or future developed environment that offers a secure area of this type is understood to be within the scope of the term TEE as used herein. At times the specification refers to a 'TEE Enclave' ― this is understood to refer to the computational environment provided by the TEE. The TEE Enclave is therefore a secure area for performing computations.
A 'shielded transaction' is understood to refer to a transaction occurring over a CBDC network in which the content of the transaction, i.e. the computations performed by the node when executing the transaction, is not accessible to untrusted components of the node. The invention facilitates this by performing computations relating to the transaction within a TEE in each node of the distributed network. This can alternatively be thought of as an encrypted transfer of assets or trigger of a smart contract. Those two are very close uses, so the present disclosure treats "transfer of assets" the same as triggering some virtual "transfer" method on a theoretical smart contract. A shielded transaction in a TEE-based node is implemented as a regular transaction encrypted using the TEE-provided cryptographic pairs meaning that it is fully secure and inaccessible to untrusted components of the distributed network.
A 'smart contract' is understood to refer to a contract that is written in computer code. The smart contract code can be executed to produce a result, e.g. a smart contract may enable one user to transfer funds to another user in a CBDC network. Smart contracts per se are known in the art and so a detailed description of smart contracts is not provided here in the interests of brevity.

This detailed description is split into two parts. The first part describes the setting up of a node so that it can take part in a distributed network according to the invention. The second part describes processes that can take place once the node has joined the distributed network such as effecting a transfer over a CBDC network, or reading a ledger state. In each case the invention is described in the context of a CBDC network, but the skilled reader will appreciate that the invention is not restricted to such a network but instead has utility in any area where it is desirable to prevent certain information from becoming accessible to all participants in a distributed network.

### Section 1: Using a trusted execution environment as a means for implementing a privacy laver on top of the blockchain-based CBDC platform.

A key concept of the invention is the use of a TEE (trusted execution environment) as a means for implementing a privacy layer on top of a decentralized CBDC platform. A TEE is a special type of execution environment that provides security features such as isolated execution, integrity of executed applications and confidentiality of their resources. In general terms, the TEE offers an execution space that provides a higher level of security for trusted applications running on the device than a rich operating system (OS) and more functionality than a 'secure element' (SE). A TEE works by establishing an isolated execution environment that runs in parallel with a standard operating system; its aim is to defend sensitive code and data against privileged software attacks from a potentially compromised native OS. Usually TEEs are implemented on hardware level as a dedicated module, making this solution perfectly compatible with high-security requirements that CBDC systems need to face.

A TEE supports safe execution of any arbitrary code, meaning it is possible to use it in almost any way as long as it makes sense in terms of provided functionality. It does not create any additional assumptions on deployed code, meaning any decentralized CBDC system can take advantage of this solution regardless of design choices made in other platform components. This characteristic is especially useful in terms of CBDC that supports smart contracts and complex virtual machines. In comparison, the other solutions that rely on cryptographic proofs would require creation of specific cryptographic tools for each module and design choice used, which is an inflexible and potentially vulnerable approach. This includes the Zero Knowledge proof discussed earlier in this specification.

In the following discussion it is assumed that a CBDC network is being maintained by two or more nodes that are used to 1) validate the data in the network by taking part in consensus 2) store and replicate the current state of the network, and past states - e.g. blockchain - to other network participants. To use a TEE in that common setup, the invention requires the moving of modules responsible for handling those two processes inside the TEE module of a node so they can benefit from the security features the TEE provides - mainly the strong assumptions on encryption and decryption of the data being processed there. Making those changes would mean that all computation done by a node on consensus is done on decrypted data ― i.e. advantageously there is no requirement to change code or smart contracts ― but that data is not possible to be accessed outside the TEE, even by node owners. The information provided to the TEE, as well as data sent out by the TEE as the result of computation is fully encrypted - it is only within the TEE itself that the data is in plaintext (unencrypted) form. That can include the underlying blockchain structure, which can be encrypted as well.

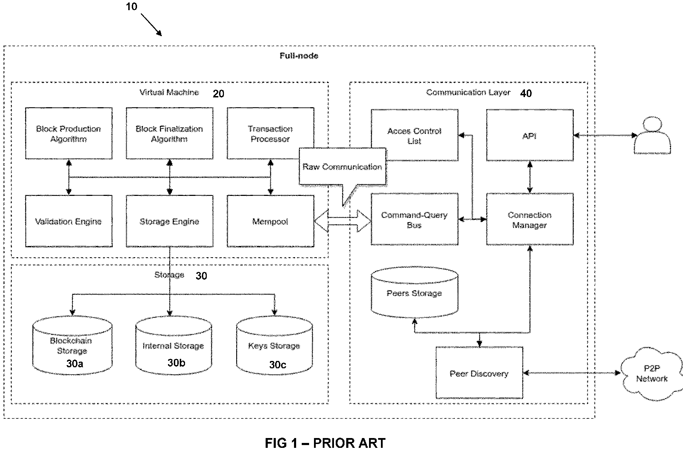

[FIG 1] shows in schematic form a prior art node ('Full-node') that is part of a blockchain-based CBDC that does not implement a TEE. The node 10 includes a virtual machine 20 that comprises a set of known components as shown in [FIG 1]. Virtual machine 20 is known per se in the art and therefore is not described in detail here as the details of virtual machine 20 are not important in the operation of the invention. It suffices to say here that virtual machine 20 can take any known or future developed form, e.g. the Ethereum Virtual Machine.

Virtual machine 20 is in communication with storage 30 that includes blockchain storage 30a, internal storage 30b and keys storage 30c. Virtual machine 20 is also in communication with a communication layer 40 that comprises a set of known components as shown in [FIG 1]. Storage 30 and communication layer 40 are both known per se in the art and therefore neither are described in detail here as the details of these components are not important in the operation of the invention.

What is important to understand from [FIG 1] is that all elements of node 10 are accessible. This includes virtual machine 20 where computations are performed to read, write and validate blocks. This means that the operator of node 10 can gain access to data used in these computations as well as the results of the computations. This is not acceptable in a CBDC network where it is important that some information remains secret.

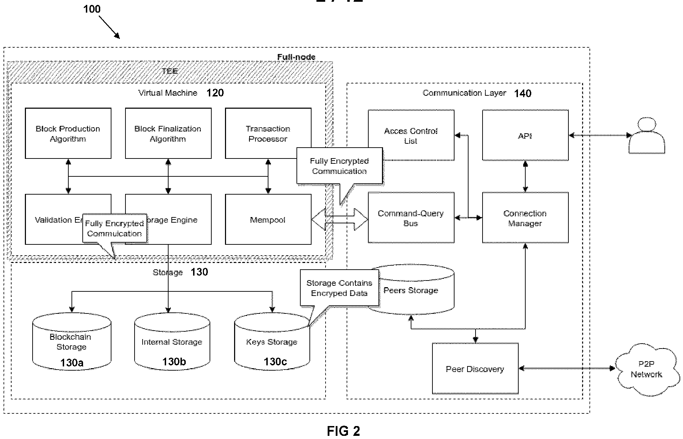

[FIG 2] shows in schematic form a TEE-compatible node 100 according to an embodiment. As with node 10, node 100 includes a virtual machine 120, a storage 130 and a communication layer 140. However, as shown in [FIG 2], in node 100 both the virtual machine 120 and the storage 130 are implemented within a TEE 140. This is a significant and non-obvious development compared with node 10 and in the following it is described how this development leads to a number of technical advantages.

Using a TEE-compatible node such as that shown in [FIG 2] forces all interactions with raw data to be executed within a TEE Enclave to ensure that no third-party software can access the raw data.. This advantageously means that blockchain computations and the data they rely upon can be kept secret from node 100.

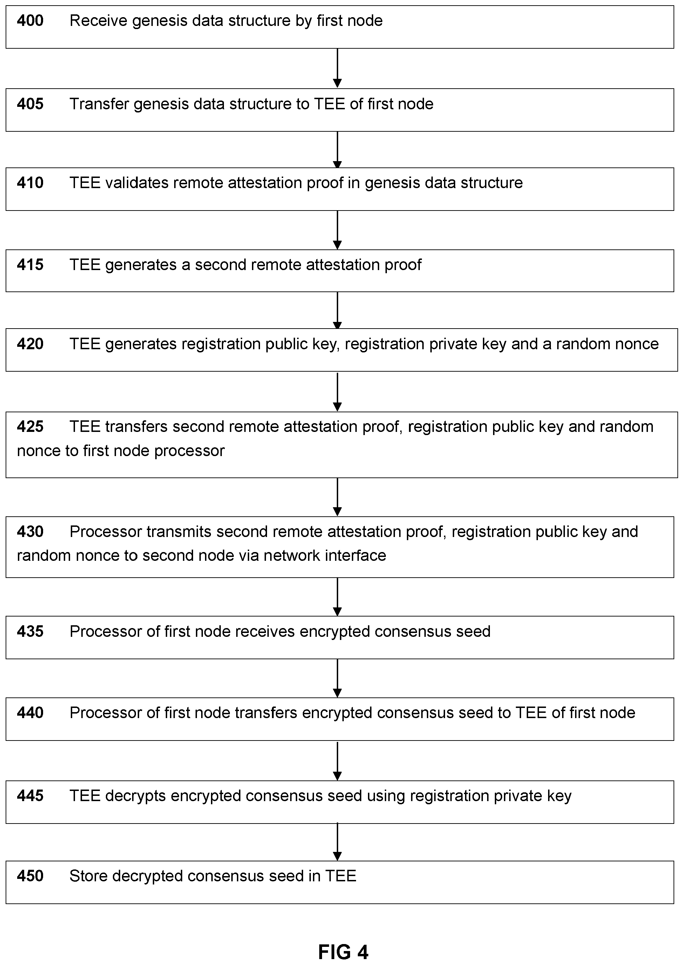

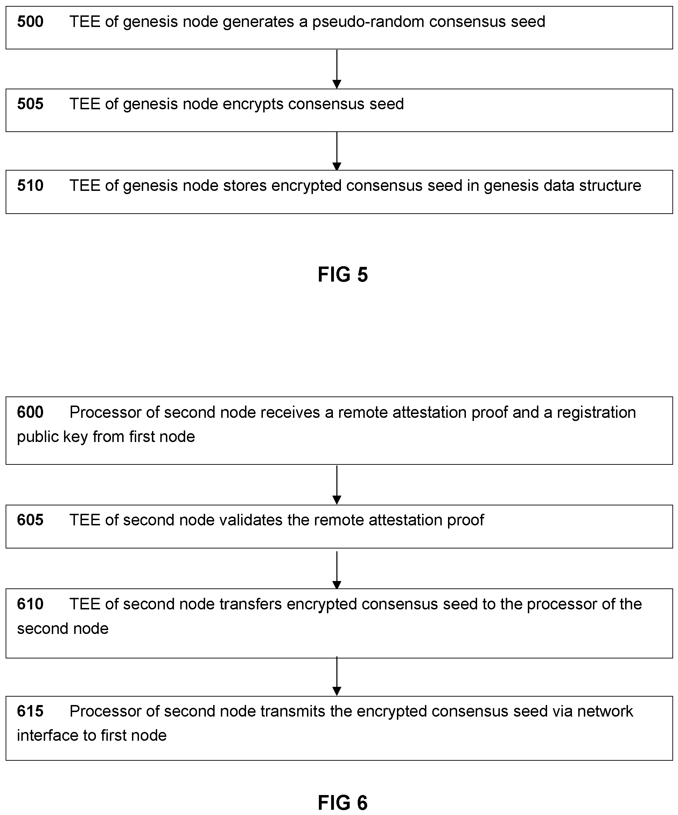

The TEE preferably implements a remote attestation tool that functions to allow other (remote) nodes to confirm that the source code of node 100, e.g. the source code of virtual machine 120, is unmodified. In this case a further advantage of the invention is that the possibility of modifying the source code of node 100 is eliminated by the remote attestation tool. This is because modified source code will fail a remote attestation check, allowing existing nodes in the CBDC network to prevent a new node running modified source code from joining the CBDC network. The remote attestation tool can therefore guarantee to all other participants of the CBDC network that the particular node is running the same code as they are and also prevent leakage of confidential data. The check for valid source code using the remote attestation tool can be performed during the new node connection process which is shown later in [FIG 4] and [FIG 6].

A process for configuring a first node to enable the first node to join a distributed network comprising the first node and a second node is described in connection with [FIG 4] and [FIG 6]. The first node comprises a processor, a memory, a network interface and a TEE and may be a node as shown in [FIG 2]. It is understood that the processor, memory and network interface are untrusted components and the TEE is a trusted component. The node is not limited to this combination of components and may comprise additional or alternative components, as long as a TEE is present.

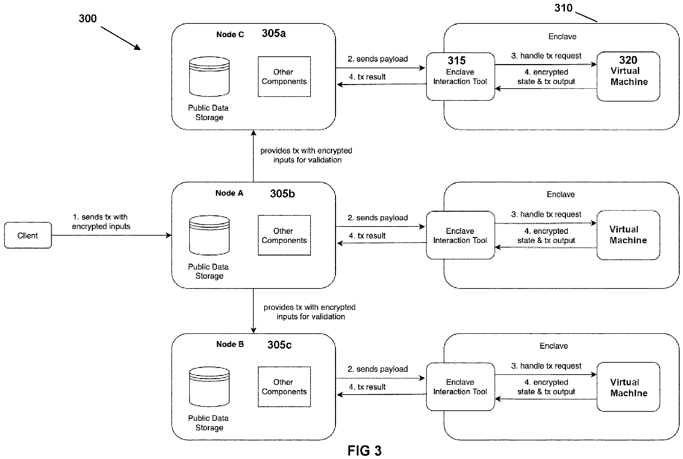

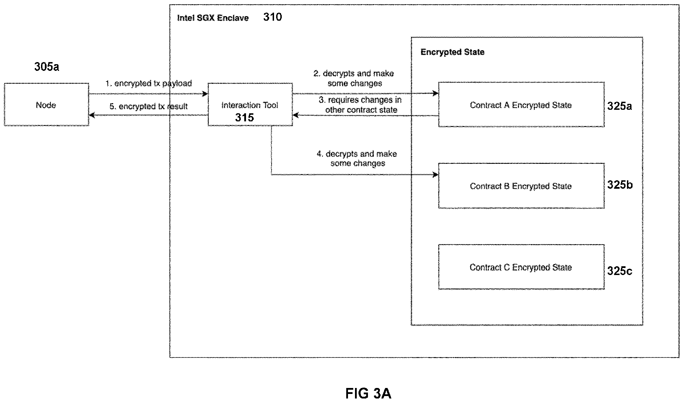

[FIG 3] illustrates in schematic form a CBDC network 300 according to the invention. The CBDC network 300 is made up of nodes 305a, 305b and 305c that provide CBDC services to a client. It will be appreciated that any number of nodes can be present in CBDC network 300, as can any number of clients be present.

Node 305a is described here as a representative example but it will be appreciated that nodes 305b, 305c can be configured in the same way as node 305a. Each node 305a, 305b, 305c can be of the type shown in [FIG 2].

Node 305a comprises a public data storage repository that stores data relating to the distributed network. Any sensitive data is stored in encrypted form in the public data storage repository. The 'other components' box shown in [FIG 3] can include some or all of the components mentioned in [FIG 2].

Node 305a includes a TEE 310 (a.k.a. 'Enclave') that handles operations within the CBDC network. In the case of a [FIG 3] a write operation is shown. In this case the TEE 310 is an Intel(R) SGX Enclave as is known per se in the art. The invention is however not limited to this type of TEE and alternatives can instead be used.

The TEE 310 includes an Enclave Interaction Tool 315 that enables data to be transferred between the TEE 310 and the untrusted components of node 300 (shown in the left-hand boxes of node 305a in [FIG 3]). The TEE 310 is configured to perform computations such as handling transaction requests and providing transaction outputs in the case of a CBDC write operation. As shown in [FIG 3A], the Enclave Interaction Tool 315 resides within TEE 310 and is therefore a trusted component.

TEE 310 also includes a virtual machine 320. Virtual machine 320 handles computations relating to the distributed network, e.g. CBDC transactions in the case of a CBDC network. Examples include decrypting the state of a smart contact and modifying this state as part of a transaction (see [FIG 3A]). As virtual machine 320 resides in TEE 310 none of the plaintext data handled by virtual machine 320 is accessible to untrusted components of node 305a, including the node operator.

[FIG 3A] supplements [FIG 3] and shows in schematic form the components of TEE 320 which is capable of implementing shielded transactions in the CBDC network 300. As is shown in [FIG 3A], TEE 310 includes one or more encrypted smart contract states 325a, 325b, 325c. Although three states are shown, it will be appreciated that any number of encrypted smart contract states can be present in TEE 310. Interaction Tool 315 and/or virtual machine 320 is/are capable of decrypting any of the encrypted smart contract states to make changes to those states, e.g. as part of a write operation as may be performed during a CBDC transaction. Interaction Tool 315 and/or virtual machine 320 can use cryptographic keys provided as part of a consensus seed to node 305a when it joined the CBDC network 300 to decrypt the smart contract states. In the simplest case just one smart contract state may be required to complete a transaction, but in other cases there is an interdependence between two or more smart contracts such that Interaction Tool 315 and/or virtual machine 320 decrypts more than one smart contract state in order to complete an operation such as a CBDC transaction.

Techniques for establishing and operating the CBDC network 300 are discussed below. Advantageously, because all computations are performed within TEE 310 and data is otherwise kept in encrypted form, untrusted or unauthorised parties such as an operator of node 305a cannot gain access to sensitive information. This advantage is realised without placing additional burdens on programmers of the CBDC network.

Reference is now made to [FIG 4] which shows in schematic form a process for joining a distributed network such as CBDC network 300 according to the invention. The process of [FIG 4] is described from the perspective of the first node that is joining the distributed network. The distributed network can comprise at least two nodes discussed above. The first and second nodes can be of the type shown in [FIG 2].

In step 400 the first node receives, by the processor, a genesis data structure containing at least a first remote attestation proof. This may be received from the second node, or it may be obtained from a file repository or a bootstrap repository. The genesis data structure enables the first node to reliably determine that it is attempting to connect to a bona fide instance of the distributed network. The genesis data structure can be generated by the remote attestation tool discussed above. The genesis data structure can take the form of a JSON data structure of the type known in the art per se, for example. [FIG 5] below describes how the genesis data structure can be generated.

In step 405 the processor transfers the genesis data structure to the TEE of the first node. Here, 'transfers' is understood to mean assigning responsibility for performing computations on the genesis data structure from the processor to the TEE. Once a transfer to the TEE has taken place, the untrusted computational components of the first node such as the processor cannot access data or results of computations being performed by the TEE. Techniques for transferring instructions, data and the like between a processor and a TEE and vice versa are known per se in the art and so are not described in detail here.

In step 410 the TEE validates the first remote attestation proof. If the validation fails the TEE reports this failure to the processor which terminates the attempt to join the distributed network.

If the validation succeeds then in step 415 the TEE generates a second remote attestation proof corresponding to the first node. The second remote attestation proof can be generated by the remote attestation tool discussed above, where in this case the remote attestation tool would be executing within the TEE of the first node. The purpose of the second remote attestation proof is to prove to other nodes in the distributed network (e.g. the second node) that the first node is running an unmodified version of the network software, e.g. virtual machine 120 or 320.

In step 420 the TEE generates a registration public key and a registration private key. The registration public key and private key are a key pair and can be generated according to any known or future developed cryptographic key pair generation technique. Optionally, in step 420 the TEE may also generate a random nonce as may be required for proper operation of the distributed network. Similarly, if the random nonce is generated, this can be performed according to any known or future developed technique.

In step 425 the TEE transfers the second remote attestation proof, the registration public key and optionally the random nonce if present to the processor and in step 430 the processor transmits the second remote attestation proof, the registration public key and optionally the random nonce if present to the second node via the network interface. This enables the second node to a) validate the first node using the second remote attestation proof and b) communicate securely with the first node using the registration public key. It is important to note that the registration private key is in the possession of the TEE only, meaning that only the TEE can decrypt messages sent by the second node and encrypted by the registration public key. The untrusted components of the first node therefore cannot gain access to messages encrypted by the registration public key. This establishes a framework in which the TEE of each node in the distributed network can communicate with TEEs of other nodes securely and without the untrusted components gaining access to data relating to the distributed network.

The transmission of step 430 enables the second node to validate the first node and this validation process is described in connection with [FIG 6] below. Returning first to [FIG 4], assuming that the second node successfully validates the first node, in step 435 the processor of the first node receives an encrypted consensus seed from the second node or another location such as a file repository or bootstrap repository. The consensus seed is received via the network interface of the first node and is encrypted with the registration public key of the first node. This means that the untrusted components of the first node cannot gain access to the consensus seed.

In step 440 the processor transfers the encrypted consensus seed to the TEE and in step 445 the TEE decrypts the encrypted consensus seed using the registration private key. This produces a decrypted consensus seed that is stored in a file within the TEE in step 450. At this point the first node is ready to participate in the distributed network.

The consensus seed provides the first node with the information that it needs to correctly participate in the distributed network. This information is held in plaintext form by the TEE only, and not the untrusted components of the first node.

In one particular embodiment the consensus seed contains a consensus seed exchange private key that is usable to securely share the consensus seed with another node in the distributed network, a consensus seed input/output private key that is usable to encrypt and decrypt input/output operations and a consensus state key management file that is usable to encrypt and decrypt a memory of the node that is used to store encrypted information. It will be appreciated that the various private keys listed here have corresponding public keys that can be used to encrypt data for decryption by the corresponding private key. Only the TEE of each node has access to the consensus seed and the information it contains. In this way the TEE of each node of the distributed network can use the information contained in the consensus seed to participate in the distributed network, e.g. perform computations as needed. In the case of a CBDC network, the information contained in the consensus seed allows each node to participate in transactions over the network. This is described in more detail later in this specification.

The list of components of the consensus seed set out in the immediately preceding paragraph is not an exhaustive list. Additional components, or alternative components, can be provided in place of the items listed above. The skilled person will be able to select an appropriate payload for the consensus seed given the specifics of a particular network implementation and the teaching herein.

Referring now to [FIG 5], a process is described for instantiating a genesis node in a distributed network such as a CBDC network. At this point, the network does not exist - the genesis node is the initial or first node of the network. The genesis node can be a node of the type shown in [FIG 2].

In step 500 the TEE of the genesis node generates a pseudo-random consensus seed. This consensus seed is preferably a 256-bit value. The consensus seed is usable to derive other keys that are necessary for nodes to take part in the distributed network that is being set up, e.g. the consensus seed exchange private key, the consensus seed input/output private key and the consensus state key management file discussed above. The TEE of other nodes that subsequently join the distributed network can use the consensus seed to derive these keys. Nodes can use any known or future developed key derivation function to derive these keys, e.g. the HMAC (hash-based message authentication code) key derivation function known as HKDF. Any derived keys can be stored with the initial pseudo-random value to form the consensus seed.

In step 505 the TEE of the genesis node encrypts the consensus seed (including any derived keys if present) to produce an encrypted consensus seed. The encryption can be performed, for example, using a shared secret key and an output of a Diffie-Hellman Key Exchange (DHKE) function associated with a new node being added. This means that only the TEE of a node can decrypt the consensus seed to obtain the consensus seed in plaintext form. The untrusted components of the genesis node (or indeed any other node) cannot gain access to the unencrypted consensus seed.

In step 510 the TEE of the genesis node stores the encrypted consensus seed in the genesis data structure (ready for receipt by a new node per step 400 of [FIG 4]). The genesis data structure can be stored by the genesis node and can be, but does not need to be, stored in the TEE because it includes only the encrypted consensus seed. Alternatively the genesis data structure can be stored in another location such as a file repository or bootstrap repository.

At this point the information needed to enable further nodes to connect to the distributed network established by the genesis node is available. The genesis data structure can be transmitted to nodes attempting to join the distributed network and participate in it ― see step 435 of [FIG 4].

Referring now to [FIG 6] a process is described for configuring a first node to enable the first node to join a distributed network comprising the first node and a second node. This process is described from the perspective of the second node which is part of the network already. The second node could be the genesis node discussed above in connection with [FIG 5], for example. This process is complementary to the process of [FIG 4] as explained below. The first and second nodes can be of the type shown in [FIG 2]. The distributed network can comprise the at least two nodes discussed above and may be a CBDC network.

In step 600 the processor of the second node receives a remote attestation proof and a registration public key from the first node. Step 600 can therefore follow step 430 of [FIG 4].

In step 605 the TEE of the second node validates the remote attestation proof. The validation can be performed according to any remote attestation proof validation technique known in the art or a future developed technique. In the case the validation fails, the second node does not take any further action to enable the first node to join the distributed network. An error message may be transmitted back to the first node indicating that validation failed and hence the first node is not permitted to join the distributed network.

In the case the validation succeeds, in step 610 the TEE of the second node transfers the encrypted consensus seed to the processor of the second node and in step 615 the processor transmits the encrypted consensus seed via the network interface of the second node to the first node. This enables the first node to receive the information it needs to join the distributed network and participate in it ― see step 435 of [FIG 4]. The encrypted consensus seed can be obtained from the TEE of the second node, an untrusted memory of the second node, or an external source such as a file repository or bootstrap repository.

As time goes on and the number of nodes in the distributed network increases, the consensus seed is distributed among these new nodes at network registration ([FIG 4] and [FIG 6]). The consensus seed therefore establishes a network-wide set of cryptographic keys that are usable by nodes to participate in consensus and other such network activities. As the consensus seed is never in unencrypted form other than when it is within a TEE of a node, other parties such as node owners cannot gain access to the consensus seed in a usable form.

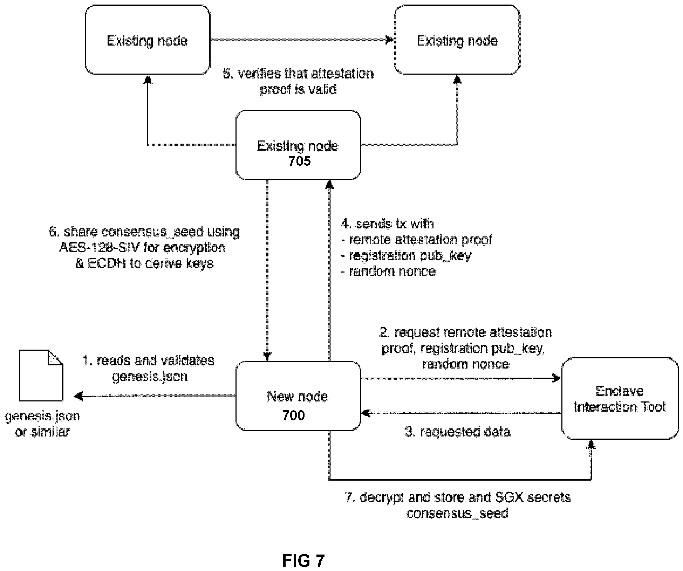

[FIG 7] shows the steps discussed in connection with [FIG 4] and [FIG 6], i.e. the joining of a new node to an existing CBDC network such as network 300, from the perspective of the network as a whole. New node 700 is the first node and existing node 705 is the second node / genesis node as discussed above.

### Section 2: Using a distributed network comprising nodes as discussed above to implement shielded transactions and contract calls on top of blockchain-based CBDC platform.

Having described in Section 1 how to configure a node to participate in a distributed network according to the invention, in Section 2 description is provided of such a node performing secure computations within the distributed network. Section 2 is also described in the context of a CBDC network but this is purely exemplary and it will be appreciated that the principles established in Section 2 can be applied to other types of distributed network.

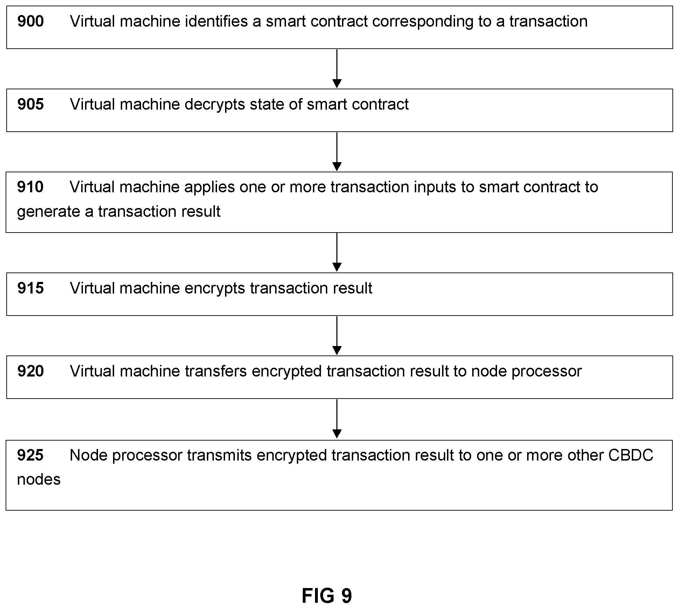

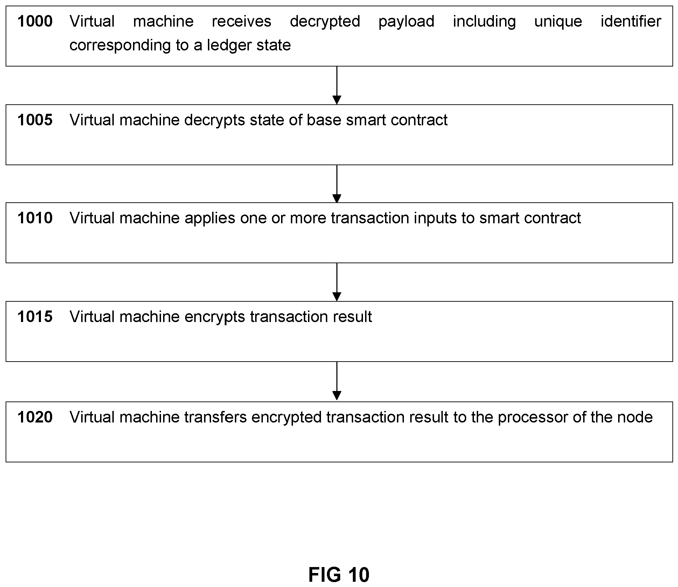

The following sets processes for securely operating on data in a distributed network according to the invention. The examples of writing data ([FIG 9]) and reading data ([FIG 10]) are provided, but the invention is not restricted to these two operations and the principles established herein can be extended by the skilled person to other types of operation.

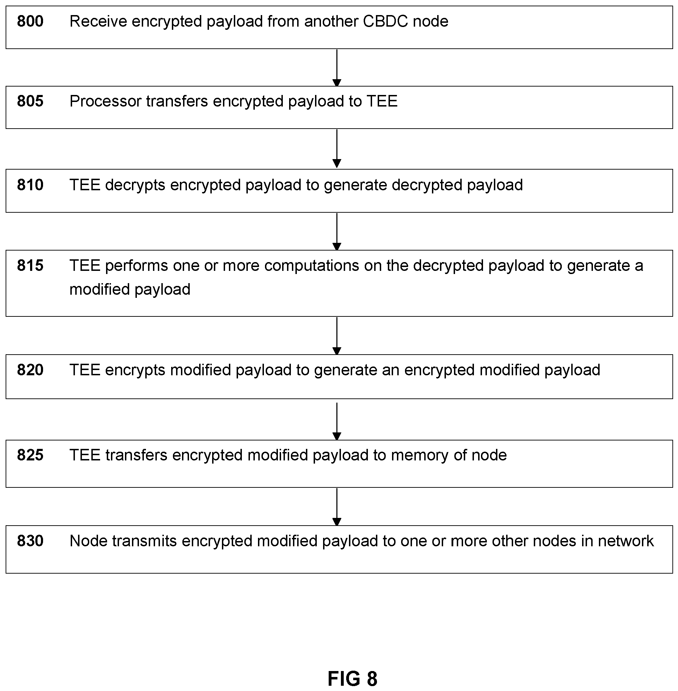

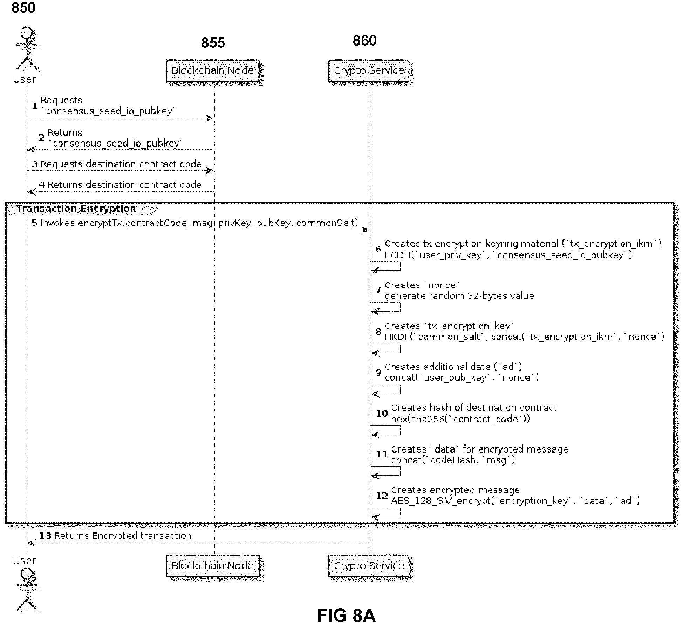

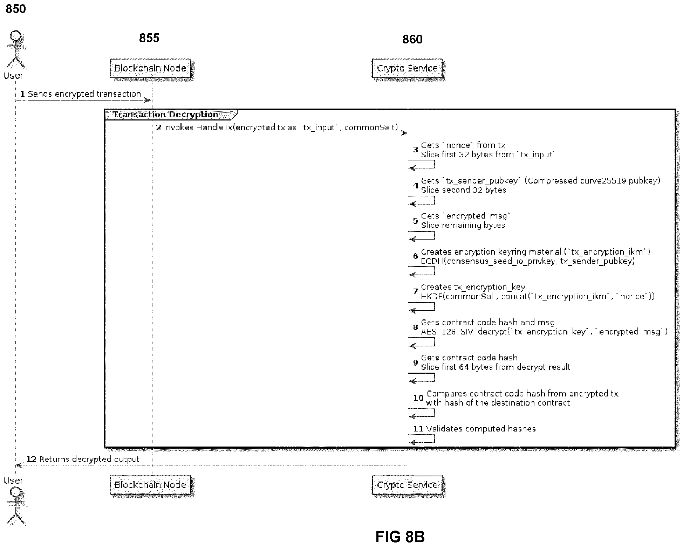

[FIG 8] shows a process for writing data to a CBDC network (e.g. CBDC network 300). This process can be performed by a node configured according to [FIG 2], i.e. a node comprising a processor, a memory, a network interface and a TEE. This node has undergone the configuration / set up process of Section 1 of this disclosure and is thus part of the CBDC network.

In step 800 the node receives an encrypted payload from another node in the CBDC network. The encrypted payload is received via the node's network interface. The processor of the node stores the encrypted payload in the node's memory. The untrusted components of the node do not have access to the necessary key(s) to decrypt the encrypted payload.

In step 805 the processor transfers the encrypted payload from the memory to the TEE and in step 810 the TEE decrypts the encrypted payload to generate a decrypted payload. The TEE can use a cryptographic key stored in the TEE to perform the decryption. The decryption key is obtained from the consensus seed, or derived from a key obtained from the consensus seed. In this connection reference is made to the earlier discussion in Section 1 relating to the consensus seed and key(s) it may comprise. The write operation may in particular make use of the consensus seed input/output private key for decryption.

In step 815 the TEE performs one or more computations on the decrypted payload to generate a modified payload and optionally also an encrypted computation result. The modified payload could be, for example, a new balance for a particular user following a payment over a CBDC network. The computation result could be, for example, a success or failure message following an attempt to make a payment over a CBDC network, or a ledger state in the case of a read operation (see [FIG 10]). These are purely exemplary and it will be appreciated that in practice the invention is not limited in this regard.

The one or more computations can include validating data in the distributed network by taking part in consensus, the data contained in the encrypted payload. The one or more computations can additionally or alternatively include storing and replicating a current state of the distributed network based on data in the encrypted payload. The one or more computations can further additionally or alternatively include generating a computational result that is usable in a consensus process of the distributed network. These computations per se advantageously do not need to deviate from known techniques for distributed computing, e.g. in existing blockchain-based distributed networks. This is because the network itself does not need to take account of the fact that these computations are being performed in a TEE of a node rather than using untrusted components.

The one or more computations can be performed by virtual machine 120 (or equivalently virtual machine 320) in the case of a CBDC network. Virtual machine 120 can be configured to perform the process of [FIG 8] to effect a transaction over the CBDC network. Advantageous changes do not need to be made to virtual machine 120 to enable it to work with the invention because the unencrypted data is compatible with consensus and a virtual machine used by that CBDC platform itself.

In step 820 the TEE encrypts the modified payload to generate an encrypted modified payload. The encryption can be performed using key(s) obtained from the consensus seed. For example, the consensus seed input/output public key can be used for encryption. If present, the computational result can also be encrypted to produce an encrypted computational result.

In step 825 the TEE transfers the encrypted modified payload and the encrypted computational result, if present, to the untrusted memory of the node. These data are then accessible to the node's untrusted processor which in step 830 transmits at least the encrypted modified payload to one or more other nodes in the CBDC network via the node's network interface.

In this way a transaction can be performed securely as only the TEE of each node can gain access to the payload and the modified payload in plaintext form. The untrusted components of each node only ever see the (modified) payload in encrypted form and so sensitive information such as a user's balance, payment details and the like can be prevented from being accessible to unauthorised parties such as node operators. This is achieved without any increase in complexity of the coding for the CBDC network because the network itself functions in a manner that is indistinguishable from the prior art network of [FIG 1] from the perspective of a programmer. In essence, the programmer does not need to concern themselves with the fact that smart contracts are executed in the TEE ― the code of the smart contracts is unchanged, it is just the execution environment that is varied. This is a significant improvement with relation to alternative solutions for providing shielded transactions on a CBDC network such as solutions relying on Zero Knowledge proofs, where coding complexity is increased. This also means that the invention offers a distributed network that is easier to debug and test, which in the case of a CBDC network is highly desirable since bugs in a live version of the CBDC network can result in highly undesirable issues for users (e.g. lost funds).

[FIG 8A] and [FIG 8B] supplement [FIG 8] as they respectively show a detailed implementation for encrypting and decrypting a shielded transaction in a CBDC network (e.g. network 300) according to an embodiment of the invention. [FIG 8A] and [FIG 8B] each include a user 850 (e.g. a computing device owned by a private individual or an institution such as a bank), a blockchain node 855 (e.g. the node of [FIG 8]) and a crypto service 860 that is provided by a TEE of the node. The decrypted output of [FIG 8B] could be, for example, an indication as to whether a transaction was successful or failed, or non-sensitive information relating to the transaction.

Existence of a privacy layer inside the CBDC network according to the invention allows encryption of data being used in consensus. That may include any arbitrary data that is needed for consensus in any particular CBDC network, but is mainly required for creation of shielded transactions. Regular transactions in decentralized platforms are used as a writing mechanism to its state. They usually contain information on asset transfers and/or smart contract triggers. Shielded transactions are similar to them, meaning they provide the same functionality, but have major differences regarding data visibility. While regular transactions provide data available to anyone, shielded transactions require that data to be confidential and limited only to authorised parties, e.g. one or more of a) parties directly engaged b) any potential endorsers c) authorities and regulation bodies.

It will be appreciated from the foregoing that the invention can achieve computation of fully confidential data on any decentralized network. This mechanism is capable of providing shielded transactions in a CBDC network and has significant advantages over alternative techniques. The most popular alternative is the use of Zero Knowledge ('ZK') cryptography, as touched upon earlier. Table 1 directly below sets out a comparison between those two approaches.

**Table 1 ― comparison between the invention and Zero Knowledge (ZK) cryptography**

| **Criterion** | **TEE Based** | **ZK Based** |
|---|---|---|
| Requires specific hardware | Yes. Requires CPU compatible with TEE | No |
| Ease of smart contracts development | Yes. Fully compatible with smart contracts. | More complex; Requires detailed knowledge of cryptography. |
| Possibility to create fully-shielded smart contracts | Yes. All the data sent to contract such as payload, sender, destination etc. are encrypted. | There are no production-ready solutions for fully-shielded smart contracts. |

Table 1 demonstrates that while Zero Knowledge has less assumptions on hardware being used, it is hard to utilize in smart contract and virtual machine-based platforms. Additionally it creates a huge knowledge barrier required for any developers wanting to develop code on it to overcome. In terms of a CBDC platform, this would severely limit the innovative nature of the platform and may create hard to detect vulnerabilities which key stakeholders such as banks and central banks cannot risk. A TEE-based solution is much more promising and easy to use for that purpose.

[FIG 9] shows a process for performing a transaction over a CBDC network (e.g. CBDC network 300) according to an embodiment. The process of [FIG 9] can be performed as part of step 815 of [FIG 8]. In this case the decrypted payload (step 810 of [FIG 8]) includes one or more transaction inputs corresponding to the transaction. It should be recalled that virtual machine 120 (or equivalently virtual machine 320) is implemented by a TEE of the node and hence is operating in a trusted environment.

In step 900, virtual machine 120 identifies a smart contract corresponding to the transaction. This identification is based on the one or more transaction inputs. This smart contract may be referred to as the base smart contract.

In step 905, virtual machine 120 decrypts the state of the smart contract. The decryption can be performed using a decryption key that is part of, or derived from, the consensus seed. For example, the consensus seed input/output private key could be used to decrypt the state of the smart contract.

In step 910, virtual machine 120 applies the one or more transaction inputs to the smart contract to generate a transaction result. In some cases virtual machine 120 may determine that one or more additional smart contracts are necessary to execute the base smart contract. In this case step 910 also includes virtual machine 120 decrypting the state of the one or more additional smart contracts that are required by the base smart contract and using the one or more additional smart contracts to generate the transaction result. The state of the one or more additional smart contracts can be decrypted in the same manner as the state of the base smart contract.

In step 915, virtual machine 120 encrypts the transaction result. The encryption can be performed using an encryption key that is part of, or derived from, the consensus seed. For example, the consensus seed input/output public key could be used to encrypt the transaction result.

In step 920, virtual machine 120 transfers the encrypted transaction result to the processor of the node. This transfer can take place as part of the transfer of the computation result (see step 825 of [FIG 8]). Following this, in step 925 the processor of the node transmits at least the encrypted transaction result to at least one other node in the CBDC network. A message may also be sent to the user to indicate whether the transaction was successful or not. In this way, a shielded transaction can take place on the CBDC network.

The processes of [FIG 8] and [FIG 9] can be used to apply transactions inside the CBDC network - i.e. writing information to its state. Other than writing, it is also desirable to provide a secure method for reading data from the CBDC network. Reading a ledger state in that case is similar to that of overwriting the state as occurs as part of a transaction, with the only difference being the absence of a validation request to other nodes. In this case all computations are done within one node. [FIG 10] shows a process for reading a ledger state in a CBDC network according to the invention.

In step 1000 a decrypted payload that includes a unique identifier corresponding to a ledger state within the CBDC network is obtained. The unique identifier could be, for example, an address within the distributed network such as a wallet address or smart contract address within a CBDC network. Virtual machine 120 (or equivalently virtual machine 320) identifies a smart contract based on the unique identifier, the smart contract corresponding to the ledger state. This smart contract can be referred to as a base smart contract.

In step 1005, virtual machine 120 decrypts the state of the base smart contract. The decryption can be performed using a decryption key that is part of, or derived from, the consensus seed. For example, the consensus seed input/output private key could be used to decrypt the state of the smart contract.

In step 1010, virtual machine 120 applies the one or more transaction inputs to the smart contract to generate a transaction result. In some cases virtual machine 120 may determine that one or more additional smart contracts are necessary to execute the base smart contract. In this case step 1010 also includes virtual machine 120 decrypting the state of the one or more additional smart contracts that are required by the base smart contract and using the one or more additional smart contracts to generate the transaction result. The state of the one or more additional smart contracts can be decrypted in the same manner as the state of the base smart contract.

In step 1015, virtual machine 120 encrypts the transaction result. The encryption can be performed using an encryption key that is part of, or derived from, the consensus seed. For example, the consensus seed input/output public key could be used to encrypt the transaction result.

In step 1020, virtual machine 120 transfers the encrypted transaction result to the processor of the node. A message may also be sent to a user indicating the transaction result.

It will be appreciated that the invention described herein and aspects thereof can be implemented using one or more computers having at least the components described in connection with [FIG 2]. The invention can be implemented by such computers performing operations as defined in computer-readable instructions. Said instructions may be stored on a computer-readable medium, and said computer-readable medium may be a non-tangible computer-readable medium. A set of computer-readable instructions stored on such a medium also falls within the scope of the invention.

It will be appreciated that the invention is susceptible to many modifications, alterations and adjustments. Embodiments arising from any such modifications are within the scope of the invention which is defined by the appended claims.

## Claims

1. A computer-implemented method for securely operating on data in a distributed network, the method performed by a node of the distributed network, the node comprising a processor, a memory, a network interface and a trusted execution environment, TEE, the method comprising:
receiving, by the processor and via the network interface, from another node in the distributed network, an encrypted payload and storing the encrypted payload in the memory;
transferring, by the processor, the encrypted payload from the memory to the TEE;
decrypting, by the TEE, the encrypted payload to generate a decrypted payload;
performing, by the TEE, one or more computations on the decrypted payload to generate a modified payload;
encrypting, by the TEE, the modified payload to generate an encrypted modified payload;
transferring, by the TEE, the encrypted modified payload to the memory; and
transmitting, by the processor, the encrypted modified payload to one or more other nodes in the distributed network via the network interface.

2. The computer-implemented method of claim 1, wherein the one or more computations include validating data in the distributed network by taking part in consensus, the data contained in the encrypted payload.

3. The computer-implemented method of claim 1 or claim 2, wherein the one or more computations include storing and replicating a current state of the distributed network based on data in the encrypted payload.

4. The computer-implemented method of any preceding claim, wherein the one or more computations include generating a computational result that is usable in a consensus process of the distributed network.

5. The computer-implemented method of any preceding claim, wherein the distributed network is an account based central bank digital currency network, CBDC, and the TEE implements a virtual machine suitable for use in the CBDC network, the virtual machine configured to perform the one or more computations.

6. The computer-implemented method of claim 5, wherein the decrypted payload includes one or more transaction inputs corresponding to a transaction taking place via the CBDC network, the method further comprising:
identifying, by the virtual machine and based on the one or more transaction inputs, a smart contract corresponding to the transaction;
decrypting, by the virtual machine, the state of the smart contract;
applying, by the virtual machine, the one or more transaction inputs to the smart contract to generate a transaction result;
encrypting, by the virtual machine, the transaction result;
transferring, by the virtual machine, the encrypted transaction result to the processor as part of the computation result; and
transmitting, by the processor, at least the encrypted transaction result to at least one other node in the CBDC network.

7. The computer-implemented method of claim 6, further comprising:
identifying, by the virtual machine, one or more additional smart contracts required for execution of the smart contract; and
decrypting, by the virtual machine, the state of the one or more additional smart contracts;
wherein the applying, by the virtual machine, the one or more transaction inputs to the smart contract to generate the transaction result comprises using the one or more additional smart contracts to generate the transaction result.

8. The computer-implemented method of claim 5, wherein the decrypted payload includes a unique identifier corresponding to a ledger state within the CBDC network, the method further comprising:
identifying, by the virtual machine and based on the unique identifier, a smart contract corresponding to the ledger state;
decrypting, by the virtual machine, the state of the smart contract;
applying, by the virtual machine, the one or more transaction inputs to the smart contract to generate a transaction result;
encrypting, by the virtual machine, the transaction result; and
transferring, by the virtual machine, the encrypted transaction result to the processor as part of the computation result.

9. A computer-implemented method for configuring a first node to enable the first node to join a distributed network comprising the first node and a second node, the first node comprising a processor, a memory, a network interface and a trusted execution environment, TEE, the method comprising:
receiving, by the processor, a genesis data structure containing at least a first remote attestation proof;
transferring, by the processor, the genesis data structure to the TEE;
validating, by the TEE, the first remote attestation proof;
generating, by the TEE, a second remote attestation proof corresponding to the first node;
generating, by the TEE, a registration public key and a registration private key;
transferring, by the TEE, the second remote attestation proof and the registration public key to the processor;
transmitting, by the processor and via the network interface, the second remote attestation proof and the registration public key to the second node;
receiving, by the processor and via the network interface, an encrypted consensus seed, the encrypted consensus seed encrypted using the registration public key;
transferring, by the processor, the encrypted consensus seed to the TEE;
decrypting, by the TEE, the encrypted consensus seed using the registration private key; and
storing, in a file within the TEE, the decrypted consensus seed.

10. The computer-implemented method of claim 9, wherein the decrypted consensus seed contains:
a consensus seed exchange private key usable to securely share the consensus seed with another node in the distributed network;
a consensus seed input/output private key usable to encrypt and decrypt input/output operations; and
a consensus state key management file usable to encrypt and decrypt a memory of the node that is used to store encrypted information;

11. The computer-implemented method of claim 9 or claim 10, wherein the genesis data structure is received from one of: a file repository; the second node; and a bootstrap repository.

12. A computer-implemented method for configuring a first node to enable the first node to join a distributed network comprising the first node and a second node, the second node comprising a processor, a memory, a network interface and a trusted execution environment, TEE, the method comprising:
receiving, by the processor, a remote attestation proof and a registration public key from the first node;
validating, by the TEE, the remote attestation proof;
in the event the validating is successful:
transferring, by the TEE, an encrypted consensus seed to the processor; and
transmitting, by the processor and via the network interface, the encrypted consensus seed to the first node.

13. The computer-implemented method of claim 12, wherein the transferring, by the TEE, the encrypted consensus seed further comprises:
retrieving, by the TEE, the encrypted consensus seed from a TEE memory.

14. The computer-implemented method of claim 12, wherein the transferring, by the TEE, the encrypted consensus seed further comprises:
instructing, by the TEE, the processor to retrieve the encrypted consensus seed from a file repository or bootstrap repository.

15. A computer-implemented method for establishing a distributed network using a genesis node comprising a processor, a memory, a network interface and a trusted execution environment, TEE, the method comprising:
generating, by the TEE, a pseudo-random consensus seed;
encrypting, by the TEE, the consensus seed; and
storing, by the TEE, the encrypted consensus seed in a genesis data structure.
